(19) Europäisches Patentamt
European Patent Office
Office européen des brevets

(11) **EP 2 995 827 A1**

(12) **EUROPEAN PATENT APPLICATION**
published in accordance with Art. 153(4) EPC

(43) Date of publication:
**16.03.2016 Bulletin 2016/11**

(51) Int Cl.:
*F16C 33/10* (2006.01)   *F16C 9/02* (2006.01)
*F16C 33/12* (2006.01)   *F16C 33/16* (2006.01)

(21) Application number: **14795409.3**

(22) Date of filing: **19.02.2014**

(86) International application number:
**PCT/JP2014/053865**

(87) International publication number:
**WO 2014/181562 (13.11.2014 Gazette 2014/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.05.2013 JP 2013099536**

(71) Applicant: **Taiho Kogyo Co., Ltd
Toyota-shi, Aichi 471-8502 (JP)**

(72) Inventors:
• **CHITOSE, Toshiyuki
Toyota-shi
Aichi 471-8502 (JP)**
• **KAMIYA, Shu
Toyota-shi
Aichi 471-8502 (JP)**

(74) Representative: **Bandpay & Greuter
30, rue Notre-Dame des Victoires
75002 Paris (FR)**

(54) **SLIDING MEMBER**

(57)   A sliding member has an alloy layer that is formed of an alloy having a predetermined shape, a binder resin that forms an overlay layer on an inner circumferential surface of the alloy layer, the inner circumferential surface sliding against a mating member, and a graphite that is contained in the overlay layer as a solid lubricant and that has a graphitization degree of 90% or more.

FIG. 1

**Description**

Technical Field

The present invention relates to a sliding member for use in sliding bearings and the like.

Related Art

Sliding bearings are used as main bearings and the like for automobile engines and other industrial machinery engines. A sliding bearing has a metal backing and a lining layer (bearing alloy layer) and is processed into the shape of a cylindrical or a half bearing. In the cases of half bearings, two half bearings are joined together and used as a cylindrical bearing. Sliding bearings of this type raise concerns about misalignment, coaxiality, and the like of a mating shaft, and there are cases where local contact between a mating shaft and a sliding bearing occurs. In particular, in the automobile industry, engines equipped with a start-stop system for reducing fuel consumption are increasing. Such engines start and stop with increased frequency, and accordingly the frequency of contact between a bearing and the mating shaft increases. When the friction between the bearing and the mating shaft increases, the starting torque increases, leading to a deterioration in fuel efficiency. Thus, there is a growing demand for engine bearings that reduce the friction during contact and start, thereby reducing the starting torque.

Patent Document 1 discloses a bearing that operates smoothly even when coming into contact with a mating shaft. Patent Document 2 discloses a technology that reduces the coefficient of friction by dividing a sliding member into a mixed lubrication region and a fluid lubrication region and selecting materials appropriate for the respective regions. Patent Document 3 discloses a method for realizing low-friction and low-wear properties by providing an oleophilic composite oxide film on a surface of a sliding member, the composite oxide film having good adhesion to the sliding member. Patent Document 4 discloses a technology that forms a film with improved anti-seizure properties, initial conformability, and cavitation resistance by using a resin binder that is made into a polymer alloy by applying high shear to a specific resin. Patent Document 5 discloses a technology that reduces the coefficient of friction by coating a surface of a sliding member with a diamond-like carbon film.

Citation List

Patent Documents

    Patent Document 1: JP 3388501B
    Patent Document 2: JP H8-151952A
    Patent Document 3: JP 2007-46496A
    Patent Document 4: JP 5127331B
    Patent Document 5: JP 2012-7199A

Summary

Technical Problem

However, Patent Documents 1 to 5 still have room for improvement with respect to the effect of reducing the starting torque. The present invention provides a sliding member that reduces the starting torque even more.

Solution

The present invention provides a sliding member including a lining layer that is formed of an alloy having a predetermined shape, a binder resin that forms an overlay layer on an inner circumferential surface of the lining layer, the inner circumferential surface sliding against a mating member, and a graphite that is contained in the overlay layer as a solid lubricant and that has a graphitization degree of 90% or more.

The graphite may have an average particle size of 3 $\mu$m or less.

The content of the graphite in the overlay layer may be 30 to 70 vol%.

The overlay layer may further contain a hard material.

The hard material may include at least one of SiC, $Al_2O_3$, TiN, AlN, $CrO_2$, $Si_3N_4$, $ZrO_2$, and $Fe_3P$.

The binder resin may include at least one of a polyamideimide resin, a polyamide resin, a polyimide resin, a phenolic resin, a polyacetal resin, a polyetheretherketone resin, a polyphenylene sulfide resin, and an epoxy resin.

The solid lubricant may further include at least one of $MoS_2$, polytetrafluoroethylene, a graphite having a graphitization degree of less than 90%, $WS_2$, h-BN (hexagonal boron nitride), and $Sb_2O_3$.

Advantageous Effects of Invention

According to the present invention, it is possible to reduce the coefficient of friction and thereby reduce the starting torque.

Brief Description of the Drawings

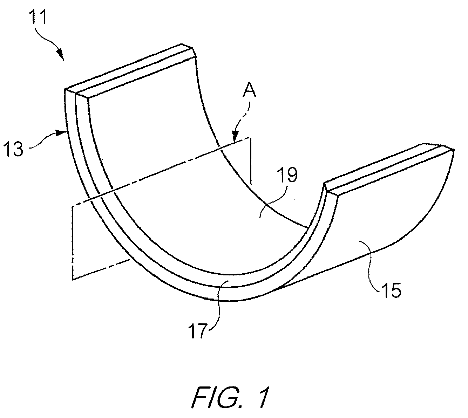

FIG. 1 is a perspective view showing the configuration of main bearing 11 according to an embodiment.

Detailed Description of Embodiments

1. Configuration

FIG. 1 shows the structure of main bearing 11 according to an embodiment. Main bearing 11 is an example of a sliding member, and may be used as a bearing between a crankshaft and a connecting rod, or the crankshaft and an engine block, of an internal combustion engine, for example. Main bearing 11 is constituted by two half bearings 13. Joining two half bearings 13 together provides a cylindrical bearing. It should be noted that FIG. 1 shows only a single half bearing 13.

Half bearing 13 has metal backing 15, lining (bearing alloy) layer 17, and overlay layer 19. Metal backing 15 is the layer for reinforcing the mechanical strength of lining layer 17. Metal backing 15 may be formed of steel, for example. Lining layer 17 is provided along a sliding surface (surface that comes into contact with a shaft) of the bearing. Lining layer 17 is the layer for providing bearing properties, that is, for example, properties such as frictional properties, seizure resistance, wear resistance, conformability, embeddability (robustness against foreign matter), corrosion resistance, and the like. Lining layer 17 is formed of a bearing alloy. To prevent cohesion to the shaft, so-called "tomogane (tomozai)", that is, the bearing alloy and the shaft being made of similar composition metals (materials) is avoided, and materials different from those for the shaft are used for the bearing alloy. In this example, the bearing is to be used for a shaft that is formed of steel, and so an aluminum alloy may be used as the bearing alloy. It should be noted that in addition to an aluminum alloy, an alloy, such as a copper alloy, that is made by using metal other than aluminum as a base may also be used.

In the case where an aluminum alloy is used, there is no particular limitation on the composition of the aluminum alloy. However, the aluminum alloy may contain 10 wt% or less of at least one element of Cr, Si, Mn, Sb, Sr, Fe, Ni, Mo, Ti, W, Zr, V, Cu, Mg, and Zn and 20 wt% or less of at least one element of Sn, Pb, In, Tl, and Bi. The elements in the former group mainly provide the strength and the wear resistance, and the elements in the latter group mainly provide the conformability. The bearing properties are adjusted by changing the types and amounts of elements that are added.

In the case where a copper alloy is used, there is no particular limitation on the composition of the copper alloy. However, the copper alloy may contain 25 wt% or less of at least one of Pb and Bi, 10 wt% or less of Sn, and 2 wt% or less of P, Ag, In, Ni, Al, and the like.

Among the above-described elements, Pb and Bi, which are soft metals, provide the conformability. Sn, which is an essential component of bronze, provides the strength and the wear resistance. The other components help improving the properties. In particular, P is effective in deoxidization, promotion of sintering, strengthening, and the like. Ag reacts with S, which is an impurity component of a lubricating oil or copper, thus forming a compound that is effective in improving the sliding properties. In improves the corrosion resistance and the wettability of the lubricating oil. Ni and Al strengthen copper.

The thickness of lining layer 17 may be 0.1 to 0.5 mm, for example. The thickness of metal backing 15 may be 1.0 to 3.0 mm, for example.

Overlay layer 19 is the layer for improving the properties of lining layer 17 such as the coefficient of friction, conformability, corrosion resistance, embeddability (robustness against foreign matter), and the like. Overlay layer 19 contains a binder resin and at least one of a solid lubricant and a hard material that are dispersed in the binder resin. It should be noted that preferably, overlay layer 19 is constituted by the solid lubricating (30 to 70 vol%), the hard material (0 to 5%), and the binder resin (balance).

A known resin such as a thermosetting resin or a thermoplastic resin, for example, can be used as the binder resin. Specifically, the binder resin includes at least one of a polyamideimide (PAI) resin, a polyimide (PI) resin, a polyamide resin, a phenolic resin, a polyacetal resin, a polyetheretherketone resin, a polyphenylene sulfide resin, and an epoxy resin. The PAI resin is preferable in terms of adhesive strength.

The content of the binder resin in the overlay layer depends on the amounts of other additives, but is preferably 30 to 70 vol% and more preferably 40 to 65 vol%.

The solid lubricating is added in order to improve the frictional properties. The solid lubricant includes at least one of $MoS_2$, $WS_2$, polytetrafluoroethylene (PTFE), graphite, h-BN, and $SB_2O_3$, for example. For example, $MoS_2$ provides good lubricity. PTFE has the effect of reducing the coefficient of friction due to low intermolecular cohesion. Furthermore, graphite improves wettability and improves initial conformability. Initial conformability is the property of allowing a sliding surface to be worn and become smooth when coming into sliding contact with a mating material after the start of sliding, thereby improving the slidability. When the slidability is improved due to the development of initial conformability, the overall wear volume of a sliding layer is reduced.

In this example, especially a graphite having a graphitization degree (graphitization degree) of 90% or more is used as the solid lubricant. Graphite is a substance having a layered crystalline structure in which (002) planes are stacked, and has the property that layers of graphite easily slide past each other. With this property, if cleavage planes of black lead are oriented in the sliding direction, the coefficient of friction decreases. Thus, the use of graphite as the solid lubricant enables a reduction in the coefficient of friction. From the standpoint of reducing the starting torque, the higher the graphitization degree of a graphite that is used as the solid lubricant, the more preferable the graphite. For example, it is preferable that the graphitization degree is 90% or more. The closer the graphitization degree is to 100%, the more preferable it is.

The graphitization degree may be calculated using an average plane spacing (inter-layer distance) $d_{002}$ and an equation (1) below. The average plane spacing $d_{002}$ is measured by X-ray diffraction.

$$\text{Graphitization degree} = (3.440 - d_{002}) \times 100 \, / \, 0.086 \cdots (1)$$

Graphite has the characteristic that it has a high affinity for engine oils. An engine oil serving as a lubricating oil is present between a bearing and a mating shaft and forms a film (oil film) therebetween. It is feared that the oil may leak as the frequency of engine start-stop increases, and the frequency of contact between the sliding member and the mating shaft accordingly increases. Since graphite has a high affinity for the engine oil, the contact angle that is formed by the overlay layer and the engine oil is small. Thus, the ability to retain the engine oil is enhanced, and leaking of the oil can be prevented, resulting in an improvement in persistence.

The affinity of the overlay layer for the engine oil can be evaluated based on the contact angle. The smaller the contact angle, the higher the affinity for the engine oil. The contact angle is preferably 20° or less and more preferably 15° or less.

It should be noted that from the standpoint of improving the affinity for the engine oil, a graphite, which serves as the solid lubricant, having a graphitization degree of less than 90% is also effective. To achieve both a reduction in the coefficient of friction and an improvement in the affinity for the engine oil, a graphitization degree of 90% or more is preferable.

If the graphite content in the overlay layer is excessively reduced, the effect of reducing the starting torque by reducing the contact angle with the engine oil cannot be obtained in a long-lasting manner. If the graphite content is excessively increased, other materials (the binder resin, etc.) can no longer be added. In view of these points, the graphite content in the overlay layer is preferably 30 to 70 vol% and more preferably 35 to 60 vol%.

Moreover, the smaller the particle size of graphite, the smaller the surface roughness of graphite, and the more easily an oil film is formed. This means that a low starting torque can be achieved. In view of this point, the average particle size of graphite is preferably 3 μm or less and more preferably 2 μm or less. Here, the median diameter $d_{50}$ is used as the average particle size of graphite. The average particle size may be measured by a known method.

The solid lubricant may also contain other solid lubricants in addition to graphite. The other solid lubricants that can be used with graphite may or may not have cleavability. To retain the oil film and prevent interference with the effect of reducing the starting torque, it is preferable that the particle sizes of the other solid lubricants are equal to or smaller than the particle size of graphite. The particle sizes of the other solid lubricants may also be measured by a known method.

An excessively large content of the other solid lubricants means a decreased content of the resin, which results in a reduction in binding strength (embrittlement of the overlay layer). For this reason, the content of the other solid lubricants in the overlay layer is preferably 1 to 30 vol% and more preferably 1 to 20 vol%.

The hard material is added in order to improve the wear resistance. The hard material includes at least one of SiC, $Al_2O_3$, TiN, AlN, $CrO_2$, $Si_3N_4$, $ZrO_2$, and $Fe_3P$, for example. The particle size of the hard material is preferably 1 μm or less. In terms of the seizure resistance, the content of the hard material in the overlay layer is preferably 0.1 to 5 vol% and more preferably 0.3 to 3 vol%. In accordance with the Mohs hardness and the particle size of a hard material that is used, an appropriate amount of the hard material to be added can be determined. It should be noted that the addition of the hard material may be omitted.

The thickness of the overlay layer is preferably 1 to 20 $\mu$m and more preferably 2 to 10 $\mu$m. The thickness of the layer is considered to affect not only the orientation of particles of the solid lubricant but also the strength of adhesion to a bearing base material, the intra-layer strength, the thermal conductivity, and the like.

It should be noted that applications of the sliding member according to the present invention are not limited to bearings. For example, the present invention may also be applied to a piston skirt. The piston skirt may be formed of, for example, a high-Si-Al alloy (corresponding to an alloy layer) such as AC8A, AC9B, or the like, which are aluminum alloy castings. To improve the wear resistance of the piston, the skirt may also be coated with an overlay layer containing a binder resin and a solid lubricant. In this case, a cylinder corresponds to the mating shaft.

2. Manufacturing method

A method for manufacturing a bearing according to an embodiment includes the following steps:

(a) preparing an overlay precursor containing a solid lubricant (graphite) and a binder resin;
(b) forming a bearing base material;
(c) applying the overlay precursor onto the bearing base material;
(d) drying the overlay precursor; and
(e) firing the overlay precursor.

In step (a) of preparing the overlay precursor, there is no particular limitation on the method for mixing the solid lubricant with the binder resin, and a known method can be used. For example, graphite and the binder resin are loaded into a kneader and mixed under the conditions of a shear rate of 0.1 to 2 m/s, and thus the overlay precursor is prepared.

To prepare the overlay precursor, the binder resin may be incompatible, but from the standpoint of practical application, it is preferable that the binder resin is at least partially compatible. Compatibility may be achieved by performing mechanical blending while applying high shear.

In step (b), a metal backing and a bearing alloy layer are pressure-welded, for example, to form a bearing base material. Furthermore, the bearing base material is processed into a predetermined shape such as a cylindrical shape or a semi-cylindrical shape.

In step (c), when applying the overlay precursor (coating) onto the bearing base material, it is preferable to use a diluent so as to allow the solid lubricant and the binder resin to be uniformly dispersed. Although there is no particular limitation on the diluent, N-methylpyrolidone (NMP) may be used, for example. Moreover, the mixing ratio of the diluent may be 30 to 70 vol%, for example, with respect to the solid content.

When applying and forming a film of the overlay precursor onto the bearing alloy layer, a known method such as pad printing of the coating, screen printing, air spraying, airless spraying, electrostatic coating, tumbling, a squeezing method, a roll method, or the like is used. Moreover, with respect to all of the film-forming methods, if the film thickness is insufficient, it is possible to perform recoating a plurality of times rather than increasing the concentration of the overlay layer in the diluent.

In step (d), the diluent is removed by drying the overlay precursor. Conditions such as the drying time, the drying temperature, and the like are not particularly limited as long as the diluent can be dried, but preferably, the overlay precursor is dried at 50 to 150°C in the atmosphere for 5 minutes to 30 hours. More preferably, the drying time is 5 to 30 minutes.

Firing in step (e) can provide a bearing in which an overlay layer is formed. Specifically, for example, the temperature of the bearing base material after step (d) is gradually increased to a firing temperature at a rate of temperature rise of 5 to 15°C/minute, and then the bearing base material is fired at 150 to 300°C in the atmosphere for 0.2 to 1.5 hours.

Examples

3. Examples

Test pieces of sliding members were produced under various conditions and evaluated. The contact angle with engine oil, the coefficient of friction, and the starting torque were used as the evaluation items.

3-1. Production of test pieces

AL.2 mm steel sheet (SPCC (JIS)) was used as the metal backing, and an aluminum-based alloy (Al-89.5% Sn-7.0% Si-2.0% Cu-1.0% Cr-0.5%) having a thickness of 0.3 mm was used as the lining layer (bearing alloy). A bimetal was made by joining these metals together, and used as the base material.

Coatings of overlay precursors with variously adjusted compositions were applied to the surface of the lining layer by a roll method. During the application, NMP was used as the diluent. The ratio of each overlay precursor to the diluent was set at 50:50 (weight ratio). After the application, drying was performed at 100°C for 15 minutes or 900 minutes. Then, the temperature was increased to 180°C at a rate of temperature rise of 10°C/minute, and firing was performed in the atmosphere for 1 hour. Thus, sliding members were produced. It should be noted that the thickness of the resulting overlay layers was 6 $\mu$m.

To calculate the graphitization degree, the average plane spacing was measured using X-ray diffraction (XRD). The measurement conditions were as follows:

Target: Cu
Filter: Ni
Tube voltage: 30 kV
Time constant: 1 second
Sweep rate: 2°/minute
Divergence slit: 1°
Receiving slit: 0.3 mm

With respect to the particle size of graphite, particle size distribution measurement was performed. It should be noted that the average particle sizes of compounds used as the other solid lubricants and hard materials were as follows: $MoS_2$: 2 $\mu$m, $WS_2$: 2 $\mu$m, PTFE: 2 $\mu$m, $Al_2O_3$: 0.5 $\mu$m, SiC: 0.5 $\mu$m, $Fe_3P$: 0.5 $\mu$m, and AlN: 0.5 $\mu$m. All of these average particle sizes were measured by the same method as the particle size of graphite.

3-2. Measurement of contact angle

The contact angle with the engine oil was performed under the following conditions using an automatic contact angle meter DM-501 manufactured by Kyowa Interface Science Co., Ltd. The measurement was performed in such a manner that 1 $\mu$L of engine oil was dropped onto a test piece, and one minute after dropping, the contact angle at 25°C was measured by a $\theta/2$ method. The contact angle was measured five times, and an arithmetic mean was used as the contact angle. It should be noted that TFF MO SN OW-20 JWS3070A manufactured by EMG Marketing Godo Kaisha was used as the engine oil.

3-3. Measurement of coefficient of friction

To measure the coefficient of friction, flat plate-shaped test pieces and a ball-on-plate tester (manufactured by Taiho Kogyo Co., Ltd., a Bowden type stick-slip tester) were used. A high-carbon chromium bearing steel (SUJ2) ball having a diameter of 8 mm was used as a mating material. The test piece was subjected to reciprocating motion with the mating material being pressed against the test piece under a load of 9.8 N. The coefficient of friction was calculated from the friction force detected by a load cell. The average slipping velocity was 3 mm/second, the sliding width was 9 mm, and an average value of the values detected during a single stroke was used as the coefficient of friction. The number of times of sliding was set at 100 reciprocations, the test time was set at 800 seconds, and an average value of the last twenty values of coefficient of friction was used for comparison and evaluation. It should be noted that the measurement was performed in an unlubricated state.

3-4. Measurement of starting torque

A rotary load tester manufactured by Shinko Engineering Co., Ltd. was used for measurement of the starting torque. This tester is constituted by two sets of test bearing portions that are attached to a housing and a load applying housing that is connected to a shaft by a ball bearing, and a mating shaft is connected to a driving motor via a torque meter. The oil is fed to the testing portions from the housing through an oil hole of the bearing. The same oil as the engine oil that was used in measurement of the contact angle was used as the lubricating oil. The feed oil temperature was set at 30°C. The operation pattern was set to be start-stop, and in a single cycle of 20 seconds, acceleration (1.7 m/s) to a shaft rotation speed of 700 rpm and the following constant-speed operation were performed for 10 seconds, and deceleration and stopping were performed for 10 more seconds. A load of 2000 N (1.2 MPa) was continuously applied. The number of cycles was set at 180 cycles, and the test time was set at 1 hour. In measurement of the starting torque, a torque peak value that occurs during the start was measured; however, since the torque significantly varied in an early stage of the test, the last twenty cycles were used as the target, and an average value of the values measured in those twenty cycles was used for comparison and evaluation.

Table 1 shows the characteristics of the test pieces of Experimental Examples 1 to 17. Table 2 shows the evaluation results with respect to these test pieces.

Table 1

| | | Binder resin | | Graphite | | | | Other solid lubricants | | Hard material | | |
|---|---|---|---|---|---|---|---|---|---|---|---|---|
| | | Type | Amoun t (vol%) | Amount added (vol%) | Average particle size | Graphitization degree (%) | Type | Amount added (vol%) | Type | Amount added (vol%) | Drying time (minute ) |
| Experimental Example | 1 | PAI | Balance | 30 | 3 | 97.7 | - | - | $Al_2O_3$ | 1 | 15 |
| | 2 | PAI | Balance | 30 | 3 | 97.7 | $MoS_2$ | 20 | SiC | 2 | 15 |
| | 3 | PAI | Balance | 40 | 2 | 93.0 | - | - | SiC | 1 | 15 |
| | 4 | PAI | Balance | 40 | 2 | 93.0 | - | - | - | - | 15 |
| | 5 | PAI | Balance | 50 | 2 | 93.0 | - | - | SiC | 2 | 15 |
| | 6 | PAI | Balance | 50 | 2 | 93.0 | - | - | $Al_2O_3$ | 3 | 15 |
| | 7 | PAI | Balance | 50 | 2 | 93.0 | $WS_2$ | 10 | $Fe_3P$ | 5 | 15 |
| | 8 | PAI | Balance | 60 | 2 | 93.0 | - | - | - | - | 15 |
| | 9 | PAI | Balance | 60 | 2 | 93.0 | - | - | $Fe_3P$ | 5 | 15 |
| | 10 | PAI | Balance | 70 | 2 | 90.7 | - | - | - | - | 15 |
| | 11 | PAI | Balance | 70 | 2 | 90.7 | - | - | AlN | 4 | 15 |
| | 12 | PAI | Balance | 50 | 2 | 93.0 | - | - | - | - | 900 |
| | 13 | PAI | Balance | - | - | - | PTF E | 35 | $Al_2O_3$ | 3 | 15 |
| | 14 | PAI | Balance | 50 | 2 | 87.2 | - | - | - | - | 15 |
| | 15 | PAI | Balance | - | - | - | $WS_2$ | 35 | SiC | 3 | 15 |
| | 16 | PAI | Balance | - | - | - | $MoS_2$ | 35 | $Al_2O_3$ | 6 | 15 |
| | 17 | PAI | Balance | - | - | - | $MoS_2$ | 35 | - | - | 15 |

EP 2 995 827 A1

Table 2

| | | | Evaluation | | |
| --- | --- | --- | --- | --- | --- |
| | | | Contact angle (°) | Coefficient of friction | Starting torque (Nm) |
| Experimental Example | | 1 | 15 | 0.27 | 1.8 |
| | | 2 | 12 | 0.25 | 1.8 |
| | | 3 | 6 | 0.22 | 1.5 |
| | | 4 | 8 | 0.22 | 1.6 |
| | | 5 | 5 | 0.2 | 1.4 |
| | | 6 | 6 | 0.2 | 1.5 |
| | | 7 | 8 | 0.23 | 1.6 |
| | | 8 | 8 | 0.19 | 1.5 |
| | | 9 | 10 | 0.21 | 1.6 |
| | | 10 | 7 | 0.19 | 1.7 |
| | | 11 | 9 | 0.22 | 1.8 |
| | | 12 | 6 | 0.21 | 1.5 |
| | | 13 | 58 | 0.13 | 2.4 |
| | | 14 | 12 | 0.35 | 2.2 |
| | | 15 | 28 | 0.25 | 2.4 |
| | | 16 | 25 | 0.27 | 2.5 |
| | | 17 | 22 | 0.27 | 2.5 |

The test pieces (Experimental Examples 1 to 12) in which a graphite having a graphitization degree of 90% or more was used as the solid lubricant showed lower starting torques than the test pieces (Experimental Examples 13 and 15 to 17) in which PTFE, $WS_2$, or $MoS_2$ was used as the solid lubricant. When compared with the test piece (Experimental Example 14) in which a graphite having a graphitization degree of less than 90% was used, the test pieces (Experimental Examples 1 to 12) in which a graphite having a graphitization degree of 90% or more was used showed lower starting torques and thus demonstrated a higher effect of reducing the starting torque.

Moreover, the test pieces (Experimental Examples 1 to 12 and 14) in which graphite was used as the solid lubricant showed smaller contact angles with the engine oil than the test pieces (Experimental Examples 13 and 15 to 17) in which graphite was not used, and thus demonstrated a tendency to improve oleophilicity. That is to say, it was found that the use of graphite can provide an effect of retaining the engine oil for a prolonged period of time even when the start/stop cycle is repeated.

A comparison between Experimental Example 16 and Experimental Example 17, in both of which $MoS_2$ was used as the solid lubricant, showed that addition of the hard material for the purpose of improvement in wear resistance resulted in an increase in the starting torque. However, the test pieces (Experimental Examples 1 to 3, 5 to 7, 9, and 11), in which graphite was used as the solid lubricant, achieved the effect of reducing the starting torque even though the hard material was added. Therefore, the use of a graphite having a graphitization degree of 90% or more as the solid lubricant can realize both the improvement in wear resistance and the effect of reducing the starting torque.

The present embodiment relates to a sliding member having an overlay layer that contains a graphite having a graphitization degree of 90% or more as a solid lubricant. According to the present embodiment, the starting torque can be reduced, and furthermore, the ability to retain an oil film and the wear resistance can also be improved. The sliding member according to the present embodiment may be used as, for example, a sliding member for an engine equipped with a start-stop system that starts and stops the engine frequently.

**Claims**

1.   A sliding member, comprising:

an alloy layer that is formed of an alloy having a predetermined shape;

a binder resin that forms an overlay layer on an inner circumferential surface of the alloy layer, the inner circumferential surface sliding against a mating member; and

a graphite that is contained in the overlay layer as a solid lubricant and that has a graphitization degree of 90% or more.

2. The sliding member according to claim 1, wherein
the graphite has an average particle size of 3 $\mu$m or less.

3. The sliding member according to claim 1 or 2, wherein
a content of the graphite in the overlay layer is 30 to 70 vol%.

4. The sliding member according to any one of claims 1 to 3, wherein
the overlay layer further contains a hard material.

5. The sliding member according to claim 4, wherein
the hard material includes at least one of SiC, $Al_2O_3$, TiN, AlN, $CrO_2$, $Si_3N_4$, $ZrO_2$, and $Fe_3P$.

6. The sliding member according to any one of claims 1 to 5, wherein
the binder resin includes at least one of a polyamideimide resin, a polyamide resin, a polyimide resin, an epoxy resin, a phenolic resin, a polyacetal resin, a polyetheretherketone resin, a polyphenylene sulfide resin, and an epoxy resin.

7. The sliding member according to any one of claims 1 to 6, wherein
the solid lubricant further includes at least one of $MoS_2$, polytetrafluoroethylene, a graphite having a graphitization degree of less than 90%, $WS_2$, h-BN, and $Sb_2O_3$.

*FIG. 1*

**INTERNATIONAL SEARCH REPORT**

| International application No. |
| --- |
| PCT/JP2014/053865 |

**A. CLASSIFICATION OF SUBJECT MATTER**
*F16C33/10*(2006.01)i, *F16C9/02*(2006.01)i, *F16C33/12*(2006.01)i, *F16C33/16* (2006.01)i

According to International Patent Classification (IPC) or to both national classification and IPC

**B. FIELDS SEARCHED**

Minimum documentation searched (classification system followed by classification symbols)
F16C33/10, F16C9/02, F16C33/12, F16C33/16

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 10-037962 A (Taiho Kogyo Co., Ltd.), 13 February 1998 (13.02.1998), paragraphs [0005] to [0026]; fig. 1 to 3 (Family: none) | 1-7 |
| Y | JP 2013-079628 A (Hitachi Appliances, Inc.), 02 May 2013 (02.05.2013), paragraphs [0036], [0069], [0072] (Family: none) | 1-7 |
| A | JP 07-247493 A (Toyota Motor Corp., Taiho Kogyo Co., Ltd., Takata Corp.), 26 September 1995 (26.09.1995), paragraphs [0004] to [0020]; fig. 1 to 3 (Family: none) | 1-7 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 May, 2014 (19.05.14) | 27 May, 2014 (27.05.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/053865

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-170574 A  (Ube Industries, Ltd.),<br>14 June 2002 (14.06.2002),<br>paragraph [0010]<br>& US 2002/0132159 A1     & US 2007/0082805 A1<br>& EP 1244165 A2          & KR 10-2002-0074422 A<br>& CN 1375886 A | 1-7 |
| A | JP 2010-196813 A  (Daido Metal Co., Ltd.),<br>09 September 2010 (09.09.2010),<br>paragraphs [0028] to [0057]; fig. 1 to 4<br>& DE 102010002236 A1     & CN 101813132 A | 1-7 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3388501 B
- JP H8151952 A
- JP 2007046496 A
- JP 5127331 B
- JP 2012007199 A